# EUROPÄISCHE PATENTSCHRIFT

(11) **EP 1 964 695 B1**
(45) Veröffentlichungstag und Bekanntmachung des Hinweises auf die Patenterteilung: **07.04.2010**
(21) Anmeldenummer: 08033508.6
(22) Anmeldetag: 24.01.2008
(51) Int. Cl.: B60G 11/27, B60G 13/10, B60G 15/14, B62K 25/00, F16F 9/02

(54) **Luftfeder- und Dämpfereinheit mit Bedienelement**
Pneumatic spring and damping unit with operating element
Unité d'amortissement et de ressort à air avec élément de commande

(30) Priorität: 02.03.2007 DE 102007010787
(43) Veröffentlichungstag der Anmeldung: 03.09.2008
(73) Patentinhaber: Continental Aktiengesellschaft, 30165 Hannover (DE); MAGURA Gustav Magenwirth GmbH & Co. KG, 72574 Bad Urach (DE)
(72) Erfinder: Krauß, Hans-Peter, 30826 Garbsen, OT Frielingen (DE); Hujer, Joachim, 72582 Grabenstetten (DE)
(74) Vertreter: Finger, Karsten

(56) Entgegenhaltungen:
- EP-A- 0 715 091
- WO-A-2005/108818
- DE-B3- 10 338 939
- DE-U1- 8 413 300
- US-A- 4 555 096
- US-B1- 6 382 602

## Beschreibung

Die Erfindung betrifft eine Luftfeder- und Dämpfereinheit für Fahrwerke von Fahrzeugen, insbesondere für Fahrräder oder Motorräder, die mit einem Anlenkpunkt am Fahrzeugrahmen bzw. an der Karosserie und mit dem anderen Anlenkpunkt am Fahrwerk angelenkt ist und mehrere koaxial angeordnete und durch Ventile miteinander verbindbare Arbeitsräume aufweist, von denen mindestens einer als teilweise von einem Rollbalg begrenzter Federungsraum ausgebildet ist, wobei mindestens zwei weitere Arbeitsräume einen Dämpfungsraum bilden, durch einen im Dämpfungsraum verschiebbaren Kolben getrennt und über im Kolben vorhandene durchströmbare Drosselventile verbindbar sind, so dass beim Ein- und Ausfedern des Fahrzeuges die Luft als Arbeitsmedium zwischen den Arbeitsräumen des Dämpfungsraumes und/oder des Federraumes ausgetauscht wird, wobei die Luftfeder- und Dämpfereinheit von außen zugängliche Bedienelemente aufweist.

Während bei Motorrädern Federungs- und Dämpfungseinrichtungen längst zum Standard gehören, gehören seit einigen Jahren auch bei nicht motorisierten sportlichen Zweirädern für den Geländeeinsatz oder auch bei Tourenrädern Federungen und Dämpfungen zu den mehr und mehr gewünschten Ausstattungsmerkmalen. In der Vergangenheit wurden hier fast ausschließlich mechanische oder pneumatische Federsysteme in Verbindung mit hydraulischen Dämpfern eingesetzt.

Neuerdings werden solche Systeme mehr und mehr ersetzt durch Luftfeder- und Dämpfereinheiten, bei denen sowohl die Federung als auch die Dämpfung durch ein gasförmiges Medium erfolgt. Solche Luftfeder- und Dämpfereinheiten dienen als besonders komfortable Federungselemente in Fahrzeugen und vermitteln ein angenehmes Fahrgefühl bei einer Federung, die je nach Gelände oder Straßenverhältnissen zwischen einem "weichen" und "harten" Federungsverhalten angepasst werden kann.

Bei Fahrrädern für den Geländeeinsatz, den so genannten "Mountainbikes" ist beispielsweise auf Gefällestrecken (Downhill) eine möglichst weiche Federung und starke Dämpfung gefragt, während bei geraden Fahrbahnabschnitten mit festem Untergrund eine harte Federung und eine möglichst geringe Dämpfung gefordert werden, um eine maximal mögliche Geschwindigkeit zu erreichen.

Die Anpassung zwischen einem "weichen" und "harten" Federungverhalten erfolgt bei Zweirädern, insbesondere bei nicht motorisierten Zweirädern, im Allgemeinen durch hand- oder hebelbetätigte Verstellelemente in oder an der Luftfeder- und Dämpfereinheit, wobei die Verstellelemente im Wesentlichen dazu dienen, Drosselquerschnitte in Strömungswegen innerhalb der Luftfeder- und Dämpfereinheiten zu verändern bzw. entsprechende Drosselventile zu verstellen.

Nachteilig ist es jedoch bei den bisherigen Verstellelementen, dass letztere je nach Konstruktion des Zweirades und je nach Einbauort und -lage der Luftfeder- und Dämpfereinheit oft unzugänglich sind oder die Luftfeder- und Dämpfereinheit gar zur Verstellung ausgebaut werden muss. Gleiches gilt in Bezug auf die Ventile zur Befüllung der Luftfeder- und Dämpfereinheiten, die ja bei nicht motorisierten Zweirädern mangels elektrisch angetriebener Kompressoren im Fahrzeug von Zeit zu Zeit mit einer externen Pumpe / Handpumpe befüllt werden müssen.

Die EP 0 715 091 A2 zeigt einen mit einem Fluid, also typischerweise mit Hydraulikflüssigkeit arbeitenden Schwingungsdämpfer mit einstellbarer Dämpfkraft, der mehrere von außen einstellbare Ventile für die Zug- und für die Druckstufe aufweist, wobei der Ventilblock innerhalb eines zweiteilig aufgebauten Behälterrohres angeordnet ist und sich relativ zum Behälterrohr verdrehen lässt, um der jeweiligen Einbausituation gerecht zu werden.

Die DE 103 38 939 B3 offenbart eine Pneumatische Feder- und Dämpfereinheit für ein Kraftfahrzeug, bei der zur Verringerung der Außenmaße die Drosselventile bzw. Überströmdrosseln nicht wie üblich im Dämpfungskolben angeordnet sind, sondern im Zylindergehäuse zwischen dem beim Einfedern größer werdenden Dämpfungsraum und dem beim Einfedern kleiner werdenden Federraum, wobei letzterer im Wesentlichen durch den abrollenden Luftfederbalg gebildet wird. Gemäß einer dortigen Ausführungsart weist ein Bund des Zylindergehäuses einen Adapter auf, der unter anderem zur Steuerung der Überströmdrosseln dient. Auch hier ergibt sich als Nachteil, dass die Zugänglichkeit eines solchen Adapters je nach Konstruktion des Fahrwerkes beschränkt ist.

Für die Erfindung bestand also die Aufgabe, eine Luftfeder- und Dämpfereinheit bereitzustellen, deren erforderliche und von außen zugängliche Bedienungselemente bei jedweder Konstruktion des Zweirades und in allen Einbauorten einsetzbar und zugänglich sind und somit leicht eingebaut und bedient werden können. Dabei sollte eine solche Luftfeder- und Dämpfereinheit weiterhin einfach und kostengünstig herzustellen sein.

Gelöst wird diese Aufgabe durch die Merkmale des Hauptanspruchs. Weitere vorteilhafte Ausbildungen sind in den Unteransprüchen offenbart.

Dabei sind die Bedienelemente an der Außenoberfläche der Luftfeder- und Dämpfereinheit um die gemeinsame Achse und relativ zur Position der Anlenkpunkte drehbar angeordnet. Hierdurch erreicht man eine schnelle und einfach durchzuführende Positionierung der Bedienelemente, so dass eine Zugänglichkeit von außen immer gesichert werden kann. Mit einer solchen Ausbildung wird es auch möglich, einen Typ von Luftfeder- und Dämpfereinheiten für verschiedene Zweiradtypen zu nutzen, was dem Gleichteileprinzip bei der Herstellung zu gute kommt.

Zusätlich sind als von außen zugängliche Bedienelemente eine Ventileinrichtung zum Befüllen der Luftfeder- und Dämpfereinheit und ein Element zur Verstellung der Dämpfung vorgesehen. Als ein Element zur Verstellung der Dämpfung kann hier zum Beispiel ein Verstellventil zur Verstellung mindestens eines der Ventile/Drosselventile zwischen den einzelnen Arbeitsräumen eingesetzt werden. Somit sind die beiden am häufigsten benutzten und gefragten Bedienelemente stets einfach erreichbar.

Weiterhin sind die Bedienelemente in einem koaxial zu den oder zwischen mindestens zwei Arbeitsräumen ausgebildeten im Wesentlichen konzentrischen Gehäuse angeordnet, wobei das Gehäuse relativ zur Position der Anlenkpunkte drehbar angeordnet ist. Eine solche Ausbildung vereinfacht die Konstruktion und verbessert sie gravierend im Hinblick auf die Langlebigkeit / Haltbarkeit der Bedienelemente, die ja bei dieser Ausbildung nicht mehr als solche den mechanischen Belastungen einer Verdrehung ausgesetzt, sondern in einem schützenden Rahmen, nämlich einem Gehäuse, angeordnet sind und mit diesem gedreht werden.

Auch lässt sich auf hier einfache Weise eine stufenlosen Drehbarkeit um 360° erreichen sowie eine Verdrehung ganz ohne Einsatz von Werkzeugen, vorausgesetzt, das Gehäuse besitzt z.B. kleine Vorsprünge oder eine Riffelung / Rauhung auf der Außenseite.

Weiterhin ist das Gehäuse mit den Bedienelementen zwischen dem teilweise von einem Rollbalg begrenztem Federraum und dem durch einen Kolben in zwei Arbeitsräume getrennten Dämpfungsraum angeordnet. An dieser Stelle der Luftfeder- und Dämpfereinheit sind nahezu alle Verbindungsquerschnitte und Ventile erreichbar, so dass die Konstruktion des Bedienelementes vereinfacht wird und gleichzeitig die Möglichkeit entsteht, die Gesamtkonstruktion im Vorfeld bereits so auszulegen, dass der jeweils wirkungsvollste Eingriff in die Strömungsquerschnitte der Luftfeder- und Dämpfereinheit erreicht wird.

Weiterhin ist das Gehäuse mit den Bedienelementen fest mit dem Rollbalg des Federraumes verbunden und der Dämpfungsraum als durch einen Kolben in zwei Arbeitsräume getrennten Hohlzylinder ausgebildet ist, der an einem seiner Enden drehbar in dem Gehäuse aufgenommen ist. Hierdurch ergibt sich eine besonders einfache und kostengünstige Bauweise für das Gesamtsystem der Luftfeder- und Dämpfereinheit.

Eine weitere vorteilhafte Weiterbildung besteht darin, dass das Gehäuse mehrteilig ausgebildet ist, vorzugsweise in Form ineinander greifender konzentrischer Ringe, und dass jeweils ein Bedienelement auf einem separaten Gehäuseteil angeordnet ist. Damit lassen sich einzelne Bedienelemente unabhängig voneinander in die jeweils beste Position bringen, z.B. das Befüllventil in Richtung Boden und die Verstellung des Drosselventils in Richtung Sattel drehen. Gleiches gilt für eine weitere vorteilhafte Weiterbildung, die darin besteht, dass mindestens eines der Bedienelemente am Hohlzylinder angeordnet ist oder an einem gegenüber dem Hohlzylinder drehbaren und mit letzterem verbundenen Zylinder-Ring.

Eine weitere vorteilhafte Weiterbildung besteht darin, dass der Hohlzylinder an seinem anderen Ende einen der Anlenkpunkte aufweist, z.B. in Form eines im Rahmen des Zweirades aufgenommenen Auges, und dass eine mit dem Kolben verbundene Kolbenstange vorgesehen ist, die konzentrisch innerhalb eines Dämpfungsraumes und innerhalb des Federraumes angeordnet ist und durch letzteren und durch einen den Federraum nach außen abschließenden Deckel hindurch mit dem anderen, d.h. dem zweiten Anlenkpunkt verbunden ist, der in der Regel in Form eines an der Fahrwerksschwinge oder an der Gabel des Zweirades aufgenommenen Auges ausgebildet ist. Eine solche Ausbildung verringert den nötigen Bauraum für die Luftfeder- und Dämpfereinheit erheblich, ohne die Funktionalität zu beeinträchtigen.

Zusätzlich und im Sinne eines weiteren Freiheitsgrades beim Einbau kann eine weitere vorteilhafte Weiterbildung darin bestehen, dass der am Ende des Hohlzylinders angeordnete Anlenkpunkt relativ zum Hohlzylinder drehbar ausgebildet ist oder darin, dass die mit dem Kolben und Anlenkpunkt verbundene Kolbenstange in dem den Federraum nach außen abschließenden Deckel drehbar gelagert ist.

Eine weitere vorteilhafte Weiterbildung besteht darin, dass der drehbar im Gehäuse aufgenommene Hohlzylinder mit einer Klemmverbindung, vorzugsweise mit einer mit dem Gehäuse verschraubten Überwurfmutter, am Gehäuse befestigt ist. Zusammen mit der Weiterbildung der Klemmverbindung dahingehend, dass ein Lösen der Klemmverbindung nur erfolgen kann, wenn die Feder- und Dämpfereinheit drucklos ist, bleiben die Bedienelemente während des Einsatzes des Zweirades in Position und verdrehen sich nicht. Damit erhält man auch eine Sicherung gegen unbeabsichtigtes oder versehentliches Verdrehen der Bedienelemente aus der optimalen Position.

Dabei besteht eine einfach zu realisierende und sehr effektive weitere vorteilhafte Ausbildung darin, dass die Klemmverbindung als eine mit dem Gehäuse verschraubte Überwurfmutter ausgebildet ist, die mit ihrem rückspringenden und den Hohlzylinder umfassenden Innenrand einen vorspringenden Absatz des Außenumfangs des Hohlzylinders übergreift und mit ihrem Innengewinde in ein Außengewinde eines zwischen Überwurfmutter und Hohlzylinder axial vorspringenden Gehäuseringes eingreift, wobei die Gewindesteigung und Abmessungen von Absatz und Innenrand so ausgebildet sind, dass bei druckbelastetem Hohlzylinder zwischen den jeweiligen komplementären Kontaktflächen eine Haftreibung entsteht, die ein manuelles Drehen der Überwurfmutter und/oder des Hohlzylinders verhindert. Zum Verdrehen bzw. zum erneuten Positionieren der Bedienelemente muss dann zunächst der Druck aus dem System abgelassen werden, wonach der als Überwurfmutter ausgebildete Schraubring leicht gelöst und das Gehäuse mit den Bedienelementen gedreht werden kann. Dann wird die Überwurfmutter wieder fest gedreht / fest verschraubt und das System mit Druck befüllt, wonach die Bedienelemente wieder fixiert sind.

Neben einer stufenlosen Drehbarkeit um 360° ist es für bestimmte Einsätze sinnvoll und vorteilhaft, wenn das Gehäuse mit Rastelementen, also etwa Schablonenringen oder Stufenringen versehen ist, die die Drehbarkeit der Bedienelemente auf mindestens zwei diskrete Positionen beschränken. Durch eine solche Ausbildung kann man bereits durch die Konstruktion und ausgehend von der Einbaulage z. B. verhindern, dass die Bedienelemente in den Bereich von drehenden Teilen am Zweirad gedreht werden, also etwa in Richtung der Speichen eines Rades. Dies trägt zur Sicherheit der Benutzer bei.

Eine weitere vorteilhafte Weiterbildung besteht darin, dass das Element zur Verstellung der Dämpfung als Verstellventil zur Verstellung Zugstufen-Dämpfung ausgebildet ist. Dies dient neben der Erfüllung eines oft vorhandenen Wunsches beim Anwender, der ein einstellbar "langsames" Ausfedern (Zugstufe) wünscht, auch zur Sicherheit bei, da in diesem Fall die für die Fahreigenschaften wichtigere Dämpfung in der Druckstufe, also beim Ausfedern, nicht verstellt werden kann.

Eine weitere vorteilhafte Weiterbildung besteht darin, dass der den Federraum nach außen abschließende Deckel als Abrollkonus (Abrollkolben) mit einer äußeren Abrollfläche für den Rollbalg ausgebildet ist. Damit lässt sich auf einfache Weise die Kennung und Progression der Luftfeder beeinflussen und anpassen, insbesondere, wenn man hierzu auswechselbare Schalenelemente für den Abrollkonus bereitstellt.

Anhand eines Ausführungsbeispieles soll die Erfindung näher erläutert werden. Es zeigen
- Fig. 1: Ein Motorrad mit einer erfindungsgemäßen Luftfeder- und Dämpfungseinheit an der hinteren Schwinge
- Fig. 2: die erfindungsgemäße Luftfeder- und Dämpfungseinheit mit lediglich den erfindungswesentlichen Bauteilen im Schnitt
- Fig. 3: eine Aufsicht auf eine erfindungsgemäße Luftfeder- und Dämpfereinheit mit Rastelementen am Gehäuse

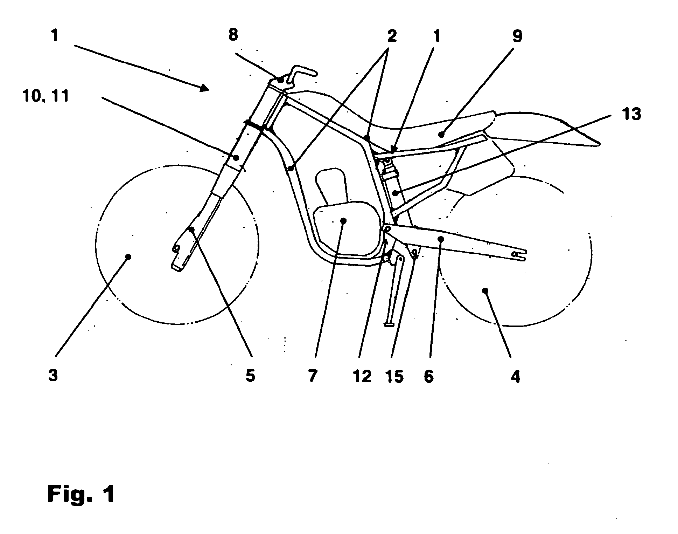

Die Fig. 1 zeigt in Form einer schematischen Darstellung ein Motorrad 1, bestehend im wesentlichen aus dem Rahmen 2, einem Vorderrad 3 und einem Hinterrad 4, einer Vorderradgabel 5, einer hinteren Schwinge 6, einem Antriebsaggregat 7, einer Lenker- und Instrumenteneinheit 8, sowie einem Sitz 9. Die Vorderradgabel 5 führt und lenkt dabei das Vorderrad 3, die Hinterradschwinge 6 führt das Hinterrad 4. Das "Fahrwerk" besteht also hier im Wesentlichen aus der Vorderradgabel 5 und der hinteren Schwinge 6.

In der Vorderradgabel 5 ist jeweils im rechten und linken Gabelast als integrales Bauteil eine Luftfeder- und Dämpfungseinheit 10 bzw. 11 aus dem Stand der Technik vorhanden, welches die Stöße des Vorderrades federt und dämpft. Die Hinterradschwinge 6 ist über das Lager 12 schwenkbar am Rahmen 2 angelenkt und wird über eine erfindungsgemäße Luftfeder- und Dämpfungseinheit 13 gegenüber Schwingungsanregungen gefedert und gedämpft.

Die hintere Luftfeder- und Dämpfungseinheit 13 ist als erfindungsgemäße Luftfeder- und Dämpfereinheit am oberen Anlenkpunkt 14 mit dem Rahmen und am unteren Anlenkpunkt 15 mit der Hinterradschwinge 6 verbunden.

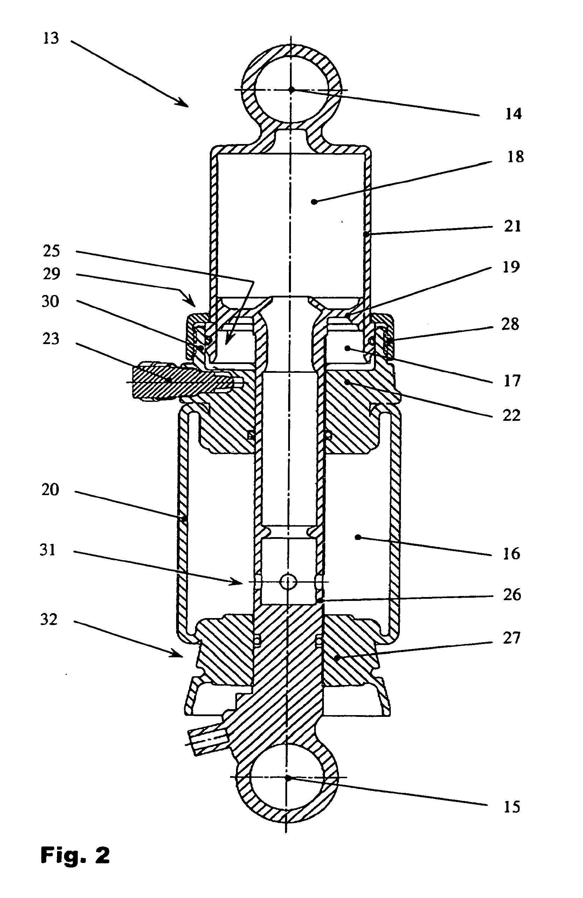

Die Fig. 2 zeigt die erfindungsgemäße Luftfeder- und Dämpfungseinheit 13 mit lediglich den erfindungswesentlichen Bauteilen im Schnitt.

Die Luftfeder- und Dämpfungseinheit 13 weist drei Arbeitsräume auf, nämlich den als Federraum ausgebildeten unteren Arbeitsraum 16, sowie den mittleren Arbeitsraum 17 und den oberen Arbeitsraum 18. Der mittlere Arbeitsraum 17 und der obere Arbeitsraum 18 sind durch einen verschiebbaren Kolben 19 getrennt und bilden zusammen den Dämpfungsraum. Im Kolben 19 sind hier nicht näher dargestellte durchströmbare Drosselventile angeordnet, über die die Arbeitsräume 17 und 18 miteinander verbindbar sind. Beim Ein- und Ausfedern des Fahrzeuges wird die Luft als Arbeitsmedium zwischen den Arbeitsräumen 17 und 18 des Dämpfungsraumes und dem Arbeitsraum 16 (Federraum) ausgetauscht, wobei durch die beim Durchströmen der Drosselventile im Kolben 19 entstehende Dissipation die Dämpfungsarbeit erzeugt / aufgenommen wird, während die Federung im Wesentlichen durch die Kompression der Luft im Arbeitsraum 16 erfolgt, der teilweise, nämlich hier im Bereich seines zylindrischen Außenumfanges, von dem Rollbalg 20 begrenzt ist.

Der durch den Kolben 19 in die beiden Arbeitsräume 17 und 18 getrennte Dämpfungsraum ist als Hohlzylinder 21 ausgebildet und weist an seinem oberen Ende den Anlenkpunkt 14, bzw. das bei dieser Ausführung fest mit dem Hohlzylinder 21 verbundene Auge zur Rahmenbefestigung auf.

Zwischen dem teilweise von einem Rollbalg begrenzten Federraum / Arbeitsraum 16 und dem durch die Arbeitsräume 17 und 18 gebildeten Dämpfungsraum bzw. Hohlzylinder 21 ist das im Wesentlichen konzentrische Gehäuse 22 mit den Bedienelementen 23 und 24 angeordnet.

Das Gehäuse 22 mit den Bedienelementen 23 und 24 ist fest mit dem Rollbalg 20 des Federraumes / Arbeitsraumes 16 verbunden. Der Hohlzylinder 21 ist an seinem unteren Ende 25 drehbar in dem Gehäuse 22 aufgenommen.

Eine mit dem Kolben 19 verbundene Kolbenstange 26 ist konzentrisch innerhalb des mittleren Arbeitsraumes 17 und innerhalb des unteren Arbeitsraumes / Federraumes 16 angeordnet, führt durch einen den Federraum nach außen abschließenden Deckel 27 hindurch und weist an ihrem dem Kolben entgegen gesetzten Ende den mit der Hinterradschwinge 6 verbundenen und ebenfalls als Auge ausgebildeten Anlenkpunkt 15 auf.

Dadurch, dass bei dieser Ausführung die Kolbenstange 26 in dem den Federraum nach außen abschließenden Deckel 27 auch drehbar gelagert ist, sind also insgesamt das Gehäuse 22 und damit die Bedienelemente 23 und 24 relativ zur Position der Anlenkpunkte 14 und 15 drehbar angeordnet.

Der drehbar im Gehäuse 22 aufgenommene Hohlzylinder 21 ist mit einer mit dem Gehäuse 22 verschraubten Überwurfmutter 28 am Gehäuse befestigt. Die Überwurfmutter 28 übergreift mit ihrem rückspringenden und den Hohlzylinder 21 umfassenden Innenrand 29 einen vorspringenden Absatz des Außenumfangs des Hohlzylinders. Mit ihrem Innengewinde greift die Überwurfmutter 28 in ein Außengewinde eines zwischen Überwurfmutter 28 und Hohlzylinder 21 axial vorspringenden Gehäuseringes 30 ein, wobei die Gewindesteigung und Abmessungen von Absatz und Innenrand so ausgebildet sind, dass bei druckbelastetem Hohlzylinder 21 zwischen den jeweiligen komplementären Kontaktflächen eine Haftreibung entsteht, die ein manuelles Drehen der Überwurfmutter 28 und/oder des Hohlzylinders verhindert. Die durch die Überwurfmutter 28 hergestellte Verbindung zwischen Hohlzylinder 21 und Gehäuse 22 ist damit so ausgebildet, dass ein Lösen dieser Verbindung nur erfolgen kann, wenn die Luftfeder- und Dämpfereinheit drucklos ist.

Bei dieser Bauart der Luftfeder- und Dämpfereinheit findet eine Durchströmung aller Arbeitsräume statt. Beim Einfedern wird so z. B der Federraum / Arbeitsraum 16 verkleinert. Durch die dabei stattfindende Druckerhöhung strömt Luft durch die Bohrungen 31 und die hohle Kolbenstange 26 zunächst in den oberen Arbeitsraum 18. Danach und bei ebenfalls entsprechender Druckerhöhung in diesem Arbeitsraum, die ja durch den gleichzeitig aufwärts bewegten und den Arbeitsraum 18 verkleinernden Kolben 19 verstärkt wird, strömt die Luft durch die im Kolben 19 befindlichen Drosselventile unter Aufnahme von Dämpfungsarbeit durch Dissipation in den mittleren Arbeitsraum 17, der sich durch die Kolbenbewegung bei der Einfederung vergrößert. Beim danach erfolgenden Ausfedern und einem sich dann verkleinernden mittleren Arbeitsraum 17 strömt dann die Luft über das als Bedienelement 23 ausgebildete Verstellventil zur Verstellung der Zugstufen-Dämpfung wieder zurück in den Federraum / Arbeitsraum 16.

Beim Ein- und Ausfedern kann der Rollbalg auf einem Abrollkonus 32 abrollen, der die Außenkontur des den Federraum nach außen abschließende Deckels 27 bildet und durch Formgebung auf die jeweils gewünschte Dämpferkennung anpassbar ist. Der hier eingesetzte Abrollkonus weist einen Konuswinkel von 13,5° auf und verleiht damit der Luftfeder eine progressive Kennlinie, wodurch diese insbesondere für "Downhill-Einsatz" von geländegängigen Fahrrädern geeignet ist.

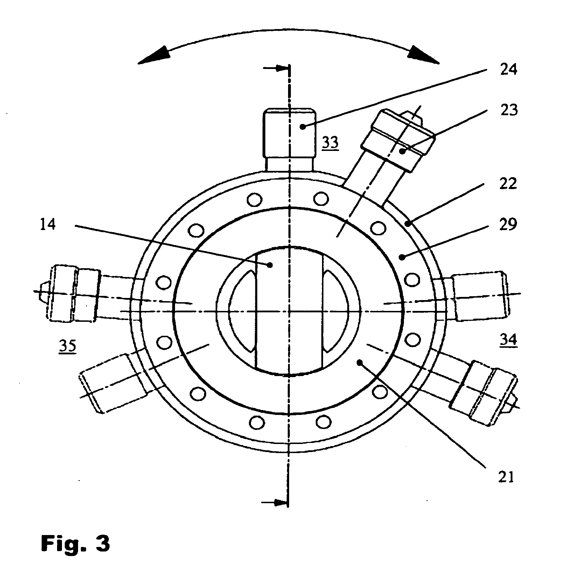

Fig. 3 zeigt zur Verdeutlichung noch einmal eine Aufsicht auf eine erfindungsgemäße Luftfeder- und Dämpfereinheit 13, bei der das Gehäuse 22 mit hier nicht näher dargestellten innen liegenden Rastelementen versehen ist, die die Drehbarkeit der Bedienelemente 23 und 24 auf die hier ebenfalls dargestellten drei diskreten Positionen 33, 34 und 35 beschränken.

### Bezugszeichenliste

### (Teil der Beschreibung)

- 1: Motorrad
- 2: Rahmen
- 3: Vorderrad
- 4: Hinterrad
- 5: Vorderradgabel
- 6: Hintere Schwinge
- 7: Antriebsaggregat
- 8: Instrumenteneinheit
- 9: Sitz
- 10: Luftfeder- und Dämpfungseinheit
- 11: Luftfeder- und Dämpfungseinheit
- 12: Lager
- 13: Luftfeder- und Dämpfungseinheit
- 14: Anlenkpunkt
- 15: Anlenkpunkt
- 16: Arbeitsraum / Federraum
- 17: Arbeitsraum
- 18: Arbeitsraum
- 19: Kolben
- 20: Rollbalg
- 21: Hohlzylinder
- 22: Konzentrisches Gehäuse
- 23: Bedienelement (Verstellventil)
- 24: Bedienelement (Füllventil)
- 25: Unteres Ende des Hohlzylinders
- 26: Kolbenstange
- 27: Deckel / Luftfederdeckel
- 28: Überwurfmutter
- 29: Innenrand der Überwurfmutter
- 30: Gehäusering
- 31: Bohrung
- 32: Abrollkonus
- 33 - 35: Rastpositionen

## Patentansprüche

1. Luftfeder- und Dämpfereinheit für Fahrwerke von Fahrzeugen, insbesondere für Fahrräder oder Motorräder, die mit einem Anlenkpunkt (14) am Fahrzeugrahmen bzw. an der Karosserie und mit dem anderen Anlenkpunkt (15) am Fahrwerk angelenkt ist und mehrere koaxial angeordnete und durch Ventile miteinander verbindbare Arbeitsräume (16, 17, 18) aufweist, von denen mindestens einer als teilweise von einem Rollbalg (20) begrenzter Federungsraum (16) ausgebildet ist, wobei mindestens zwei weitere Arbeitsräume (17, 18) einen Dämpfungsraum bilden und durch einen im Dämpfungsraum verschiebbaren Kolben (19) getrennt und über im Kolben vorhandene durchströmbare Drosselventile verbindbar sind, so dass beim Ein- und Ausfedern des Fahrzeuges die Luft als Arbeitsmedium zwischen den Arbeitsräumen des Dämpfungsraumes und/oder des Federraumes ausgetauscht wird, wobei die Luftfeder- und Dämpfereinheit ein oder mehrere von außen zugängliche Bedienelemente (23, 24) aufweist, wobei die Bedienelemente (23, 24) an der Außenoberfläche der Luftfeder- und Dämpfereinheit und in einem koaxial zu den Arbeitsräumen ausgebildeten im Wesentlichen konzentrischen und um die gemeinsame Achse und relativ zur Position der Anlenkpunkte (14, 15) drehbaren Gehäuse (22) angeordnet sind, wobei das Gehäuse (22) zwischen mindestens zwei Arbeitsräumen (16, 17) angeordnet ist, **dadurch gekennzeichnet, dass** das Gehäuse (22) mit den Bedienelementen (23, 24) zwischen dem teilweise von einem Rollbalg (20) begrenztem Federraum (16) und dem durch einen Kolben in zwei Arbeitsräume (17, 18) getrennten Dämpfungsraum angeordnet ist, wobei das Gehäuse (22) mit den Bedienelementen (23, 24) fest mit dem Rollbalg (20) des Federraumes (16) verbunden ist und der Dämpfungsraum als durch einen Kolben (19) in zwei Arbeitsräume (17, 18) getrennten Hohlzylinder (21) ausgebildet ist, der an einem seiner Enden (25) drehbar in dem Gehäuse (22) aufgenommen ist, und wobei die von außen zugänglichen Bedienelemente eine Ventileinrichtung (24) zum Befüllen der Luftfeder- und Dämpfereinheit und / oder ein Element (23) zur Verstellung der Dämpfung beinhalten.

2. Luftfeder- und Dämpfereinheit nach Anspruch 1, **dadurch gekennzeichnet, dass** das Gehäuse (22) mehrteilig ausgebildet ist, vorzugsweise in Form ineinander greifender konzentrischer Ringe, und dass jeweils ein Bedienelement auf einem separaten Gehäuseteil angeordnet ist.

3. Luftfeder- und Dämpfereinheit nach Anspruch 1 oder 2, **dadurch gekennzeichnet, dass** mindestens eines der Bedienelemente am Hohlzylinder (21) angeordnet ist.

4. Luftfeder- und Dämpfereinheit nach Anspruch 3, **dadurch gekennzeichnet, dass** das Bedienelement an einem gegenüber dem Hohlzylinder (21) drehbaren und mit letzterem verbundenen Zylinder-Ring angeordnet ist.

5. Luftfeder- und Dämpfereinheit nach Ansprach 1 bis 4, **dadurch gekennzeichnet, dass** der Hohlzylinder (21) an seinem anderen Ende einen der Anlenkpunkte (14) aufweist und dass eine mit dem Kolben (19) verbundene Kolbenstange (26) vorgesehen ist, die konzentrisch innerhalb eines Dämpfungsraumes und innerhalb des Federraumes (16) angeordnet ist und durch letzteren und durch einen den Federraum nach außen abschließenden Deckel (27) hindurch mit dem anderen Anlenkpunkt (15) verbunden ist.

6. Feder- und Dämpfereinheit nach Anspruch 5, **dadurch gekennzeichnet, dass** der am Ende des Hohlzylinder (21) angeordnete Anlenkpunkte (14) relativ zum Hohlzylinder drehbar ausgebildet ist.

7. Luftfeder- und Dämpfereinheit nach Anspruch 5 oder 6, **dadurch gekennzeichnet, dass** die mit dem Kolben (19) und Anlenkpunkt (15) verbundene Kolbenstange (26) in dem den Federraum nach außen abschließenden Deckel (27) drehbar gelagert ist.

8. Luftfeder- und Dämpfereinheit nach Anspruch 1 bis 7, **dadurch gekennzeichnet, dass** der drehbar im Gehäuse (22) aufgenommene Hohlzylinder (21) mit einer Klemmverbindung, vorzugsweise mit einer mit dem Gehäuse verschraubten Überwurfmutter (28), am Gehäuse befestigt ist.

9. Luftfeder- und Dämpfereinheit nach Anspruch 1 bis 8, **dadurch gekennzeichnet, dass** die Klemmverbindung so ausgebildet ist, dass ein Lösen der Klemmverbindung nur erfolgen kann, wenn die Feder- und Dämpfereinheit drucklos ist.

10. Luftfeder- und Dämpfereinheit nach Anspruch 8 oder 9, **dadurch gekennzeichnet, dass** die Klemmverbindung als eine mit dem Gehäuse verschraubte Überwurfmutter (28) ausgebildet ist, die mit ihrem rückspringenden und den Hohlzylinder umfassenden Innenrand (29) einen vorspringenden Absatz des Außenumfangs des Hohlzylinders (21) übergreift und mit ihrem Innengewinde in ein Außengewinde eines zwischen Überwurfmutter und Hohlzylinder axial vorspringenden Gehäuseringes (30) eingreift, wobei die Gewindesteigung und Abmessungen von Absatz und Innenrand so ausgebildet sind, dass bei druckbelastetem Hohlzylinder (21) zwischen den jeweiligen komplementären Kontaktflächen eine Haftreibung entsteht, die ein manuelles Drehen der Überwurfmutter (28) und/oder des Hohlzylinders (21) bzw. Gehäuses (22) verhindert.

11. Luftfeder- und Dämpfereinheit nach einem der Ansprüche 1 bis 10, **dadurch gekennzeichnet, dass** das Gehäuse mit Rastelementen versehen ist, die die Drehbarkeit der Bedienelemente auf mindestens zwei diskrete Positionen (33 - 35) beschränken.

12. Luftfeder- und Dämpfereinheit nach Anspruch 1 bis 11, **dadurch gekennzeichnet, dass** das Element zur Verstellung der Dämpfung als Verstellventil zur Verstellung der Zugstufen-Dämpfung ausgebildet ist.

13. Luftfeder- und Dämpfereinheit nach Anspruch 9 bis 12, **dadurch gekennzeichet, dass** der den Federraum nach außen abschließende Deckel (27) als Abrollkonus mit einer äußeren Abrollfläche (32) für den Rollbalg (20) ausgebildet ist.

## Claims

1. Air spring and shock absorber unit for running gear of vehicles, in particular for push bikes or motorbikes, which is coupled to the vehicle frame or to the bodywork of the vehicle by one articulation point (14), and to the running gear by the other articulation point (15) and has a plurality of working spaces (16, 17, 18) which are arranged coaxially and can be connected to one another by means of valves, and at least one of which is embodied as a suspension space (16) which is partially bounded by a rolling bellows (20), at least two further working spaces (17, 18) forming a damping space and are separated by a piston (19) which can be displaced in the damping space, and can be connected via throttle valves which can be flowed through and which are present in the piston, so that when the vehicle experiences spring compression and spring extension the air is exchanged as a working medium between the working spaces of the damping space and/or of the spring space, the air spring and shock absorber unit having one or more operator control elements (23, 24) which are accessible from the outside, the operator control elements (23, 24) being arranged on the outer surface of the air spring and shock absorber unit and in an essentially concentric housing (22) which is formed coaxially to the working spaces and is rotatable about the common axis and in relation to the position of the articulation points (14, 15), the housing (22) being arranged between at least two working spaces (16, 17), **characterized in that** the housing (22) with the operator control elements (23, 24) is arranged between the spring space (16) which is partially bounded by a rolling bellows (20) and the damping space which is divided into two working spaces (17, 18) by a piston, the housing (22) with the operator control elements (23, 24) being permanently connected to the rolling bellows (20) of the spring space (16), and the damping space is embodied as a hollow cylinder (21) which is divided into two working spaces (17, 18) by a piston (19) and is rotatably accommodated at one of its ends (25) in the housing (22), and the externally accessible operator control elements comprising a valve device (24) for filling the air spring and shock absorber unit and/or an element (23) for adjusting the damping.

2. Air spring and shock absorber unit according to Claim 1, **characterized in that** the housing (22) is embodied in a plurality of parts, preferably in the form of concentric rings which engage one in the other, and **in that** in each case an operator control element is arranged on a separate housing part.

3. Air spring and shock absorber unit according to Claims 1 or 2, **characterized in that** at least one of the operator control elements is arranged at the hollow cylinder (21).

4. Air spring and shock absorber unit according to Claim 3, **characterized in that** the operator control element is arranged on a cylinder ring which can rotate with respect to the hollow cylinder (21) and is connected to the latter.

5. Air spring and shock absorber unit according to Claims 1 to 4, **characterized in that** the hollow cylinder (21) has one of the articulation points (14) at its other end, and **in that** a piston rod (26) is provided which is connected to the piston (19) and which is arranged concentrically within a damping space and within the spring space (16) and is connected to the other articulation point (15) by said spring space (16) and by a lid (27) which closes off the spring space from the outside.

6. Air spring and shock absorber unit according to Claim 5, **characterized in that** the articulation point (14) which is arranged at the end of the hollow cylinder (21) is embodied so as to be rotatable in relation to the hollow cylinder.

7. Air spring and shock absorber unit according to Claim 5 or 6, **characterized in that** the piston rod (26) which is connected to the piston (19) and the articulation point (15) is rotatably mounted in the lid (27) which closes off the spring space from the outside.

8. Air spring and shock absorber unit according to Claims 1 to 7, **characterized in that** the hollow cylinder (21) which is rotatably accommodated in the housing (22) is attached to the housing with a clamping connection, preferably with a union nut (28) which is screwed to the housing.

9. Air spring and shock absorber unit according to Claims 1 to 8, **characterized in that** the clamping connection is embodied in such a way that the clamping connection can be released only if the spring and shock absorber unit is pressureless.

10. Air spring and shock absorber unit according to Claim 8 or 9, **characterized in that** the clamping connection is embodied as a union nut (28) which is screwed to the housing and which engages, with its set-back inner edge (29) which surrounds the hollow cylinder, over a projecting shoulder of the outer circumference of the hollow cylinder (21) and engages with its inner thread in an outer thread of a housing ring (30) which protrudes axially between the union nut and the hollow cylinder, the threaded pitch and the dimensions of the shoulder and inner edge being embodied such that when the hollow cylinder (21) is subjected to pressure loading static friction is produced between the respective complementary contact faces, which static friction prevents manual rotation of the union nut (28) and/or of the hollow cylinder (21) or housing (22).

11. Air spring and shock absorber unit according to one of Claims 1 to 10, **characterized in that** the housing is provided with latching elements which restrict the rotatability of the operator control elements to at least two discrete positions (33-35).

12. Air spring and shock absorber unit according to Claims 1 to 11, **characterized in that** the element for adjusting the damping is designed as an adjustment valve for adjusting the tensile stage damping.

13. Air spring and shock absorber unit according to Claims 9 to 12, **characterized in that** the lid (27) which closes off the spring space from the outside is embodied as a rolling cone with an outer rolling face (32) for the rolling bellows (20).

## Revendications

1. Unité d'amortissement et de ressort à air pour châssis de véhicules, notamment pour des bicyclettes ou des motocyclettes, qui est articulée par un point d'articulation (14) au cadre du véhicule ou à la carrosserie et par l'autre point d'articulation (15) au châssis, et qui présente plusieurs chambres de travail (16, 17, 18) disposées coaxialement et pouvant être connectées les unes aux autres par des soupapes, dont au moins une est réalisée sous forme de chambre de suspension (16) limitée partiellement par un soufflet roulant (20), au moins deux autres chambres de travail (17, 18) formant une chambre d'amortissement et étant séparées par un piston (19) déplaçable dans la chambre d'amortissement et pouvant être connectées par le biais de soupapes d'étranglement pouvant être parcourues par l'écoulement et prévues dans le piston, de sorte que lors de la suspension par compression et détente du véhicule, de l'air en tant que fluide de travail soit échangé entre les chambres de travail de la chambre d'amortissement et/ou de la chambre de ressort, l'unité d'amortissement et de ressort à air présentant un ou plusieurs éléments de commande (23, 24) accessibles depuis l'extérieur, les éléments de commande (23, 24) étant disposés sur la surface extérieure de l'unité d'amortissement et de ressort à air et dans un boîtier (22) réalisé coaxialement aux chambres de travail, essentiellement concentrique, et pouvant tourner autour de l'axe commun et par rapport à la position des points d'articulation (14, 15), le boîtier (22) étant disposé entre au moins deux chambres de travail (16, 17), **caractérisée en ce que** le boîtier (22) est disposé avec les éléments de commande (23, 24) entre la chambre de ressort (16) limitée en partie par un soufflet roulant (20) et la chambre d'amortissement séparée par un piston en deux chambres de travail (17, 18), le boîtier (22) avec les éléments de commande (23, 24) étant connecté fixement au soufflet roulant (20) de la chambre de ressort (16) et la chambre d'amortissement étant réalisée sous forme de cylindre creux (21) séparé en deux chambres de travail (17, 18) par un piston (19), qui est reçu à l'une de ses extrémités (25) de manière rotative dans le boîtier (22), et les éléments de commande accessibles depuis l'extérieur contenant un dispositif de soupape (24) pour remplir l'unité d'amortissement et de ressort à air et/ou un élément (23) pour le réglage de l'amortissement.

2. Unité d'amortissement et de ressort à air selon la revendication 1, **caractérisée en ce que** le boîtier (22) est réalisé en plusieurs parties, de préférence sous forme d'anneaux concentriques venant en prise les uns dans les autres, et **en ce qu'**un élément de commande est disposé dans chaque cas sur une partie de boîtier séparée.

3. Unité d'amortissement et de ressort à air selon la revendication 1 ou 2, **caractérisée en ce qu'**au moins l'un des éléments de commande est disposé sur le cylindre creux (21).

4. Unité d'amortissement et de ressort à air selon la revendication 3, **caractérisée en ce que** l'élément de commande est disposé sur un anneau de cylindre pouvant tourner par rapport au cylindre creux (21) et connecté à celui-ci.

5. Unité d'amortissement et de ressort à air selon les revendications 1 à 4, **caractérisée en ce que** le cylindre creux (21) présente à son autre extrémité l'un des points d'articulation (14) et **en ce qu'**une tige de piston (26) connectée au piston (19) est prévue, laquelle est disposée concentriquement à l'intérieur d'une chambre d'amortissement et à l'intérieur de la chambre de ressort (16) et est connectée par cette dernière et à travers un couvercle (27) fermant vers l'extérieur la chambre de ressort, à l'autre point d'articulation (15).

6. Unité d'amortissement et de ressort à air selon la revendication 5, **caractérisée en ce que** le point d'articulation (14) disposé à l'extrémité du cylindre creux (21) est réalisé de manière rotative par rapport au cylindre creux.

7. Unité d'amortissement et de ressort à air selon la revendication 5 ou 6, **caractérisée en ce que** la tige de piston (26) connectée au piston (19) et au point d'articulation (15) est montée à rotation dans le couvercle (27) fermant vers l'extérieur la chambre de ressort.

8. Unité d'amortissement et de ressort à air selon les revendications 1 à 7, **caractérisée en ce que** le cylindre creux (21) reçu de manière rotative dans le boîtier (22) est fixé au boîtier par une connexion par serrage, de préférence par un écrou d'accouplement (28) vissé au boîtier.

9. Unité d'amortissement et de ressort à air selon les revendications 1 à 8, **caractérisée en ce que** la connexion par serrage est réalisée de telle sorte qu'un desserrage de la connexion par serrage ne puisse avoir lieu que lorsque l'unité d'amortissement et de ressort à air n'est pas soumise à une pression.

10. Unité d'amortissement et de ressort à air selon la revendication 8 ou 9, **caractérisée en ce que** la connexion par serrage est réalisée sous forme d'un écrou d'accouplement (28) vissé au boîtier, qui vient en prise par le dessus avec son bord interne (29) saillant vers l'arrière et entourant le cylindre creux, avec un épaulement saillant vers l'avant de la périphérie extérieure du cylindre creux (21), et vient en prise avec son filetage interne dans un filetage externe d'un anneau de boîtier (30) saillant axialement vers l'avant entre l'écrou d'accouplement et le cylindre creux, le pas de filetage et les dimensions de l'épaulement et du bord interne étant réalisés de telle sorte que lorsque le cylindre creux (21) est sollicité en pression, il se produise entre les faces de contact complémentaires respectives une friction d'adhérence qui empêche une rotation manuelle de l'écrou d'accouplement (28) et/ou du cylindre creux (21) ou du boîtier (22).

11. Unité d'amortissement et de ressort à air selon l'une quelconque des revendications 1 à 10, **caractérisée en ce que** le boîtier est pourvu d'éléments d'encliquetage qui limitent la capacité de rotation des éléments de commande à au moins deux positions discrètes (33 - 35).

12. Unité d'amortissement et de ressort à air selon les revendications 1 à 11, **caractérisée en ce que** l'élément pour régler l'amortissement est réalisé sous forme de soupape de réglage pour le réglage de l'amortissement en traction.

13. Unité d'amortissement et de ressort à air selon les revendications 9 à 12, **caractérisée en ce que** le couvercle (27) fermant vers l'extérieur la chambre de ressort est réalisé sous forme de cône de roulement avec une surface de roulement extérieure (32) pour le soufflet roulant (20).
